# EUROPEAN PATENT APPLICATION

(11) **EP 4 223 123 A1**
(43) Date of publication of application: **09.08.2023**
(21) Application number: 23153172.4
(22) Date of filing: 24.01.2023
(51) Int. Cl.: A01N 41/04, A01P 1/00, B32B 5/24, B32B 5/30, B32B 37/04, B32B 37/24

(54) **ANTIMICROBIAL SUBSTRATES**

(30) Priority: 02.02.2022 US 202263267463 P
(71) Applicant: Kraton Polymers Nederland B.V., 1322 CE Almere (NL)
(72) Inventor: NIADA, Felipe, Houston, Texas 77084 (US); EARLEY, Stephanie, Houston, Texas 77084 (US)
(74) Representative: Henkel & Partner mbB

(57) **Abstract**

A method for forming an antimicrobial coating on a substrate is provided. The method comprises dissipating and entrapping (embedding) sulfonated copolymer particles in void spaces or interstices of fibers of a fabric forming an outer layer of a substrate. The sulfonated copolymer is selected from the group of perfluorosulfonic acid polymers such as sulfonated tetrafluoroethylene, polystyrene sulfonates, sulfonated block copolymers, polysulfones such as polyether sulfone, polyketones such as polyether ketone, sulfonated poly(arylene ether), and mixtures thereof. The fibers comprise a thermoplastic polymer having a melting point of less than 120°C, or 45-1 10°C, or 45-80°C. The sulfonated copolymer forms an antimicrobial coating layer for killing at least 90% microbes in the air within 30 minutes of contact with the coating.

## Description

### TECHNICAL FIELD

The disclosure relates to substrates, e.g., films, fabric materials, etc., having antimicrobial activity and applications thereof.

### BACKGROUND

In recent years, the increased occurrence of hospital-acquired infections has had serious implications for both patients and healthcare workers. Hospital-acquired infections typically originate in a hospital or long-term care setting. Hospitals and other healthcare facilities extensively use materials for topical applications such as wound dressings and drapes, and/or sterile drapes and articles that need to be discarded after a short usage due to infection risks. Besides topical applications, hospital HVAC systems typically operate in a warm, dark, and humid environment, making an ideal breeding ground for microbes.

A need currently exists for materials for use as bedding textiles, surgical drapes, table paper, gowns, drape sheets, coveralls, cleaning surfaces, and other applications such as air and water filters with continuous, long-term and with intrinsic antimicrobial properties.

### SUMMARY

In a first aspect, the disclosure relates to an antimicrobial substrate having a coating on at least a portion of an outer layer of a substrate. The coating comprises, consisting essentially of, or consisting of a sulfonated copolymer in powder form. The sulfonated copolymer having an Ion Exchange Capacity of at least 1.0 meq /g to reduce a microbe concentration by at least 1 log₁₀ CFU within 120 minutes contact with the sulfonated copolymer. The powder has an average particle size of 10-850 micron. The outer layer comprises entangled fibers having void spaces with surface area sufficiently sized for deposition of the powder therein. The fibers comprise a thermoplastic polymer having a melting point of less than 120°C. After deposition of the powder into the void spaces, the outer layer is heated to a temperature of less than 120°C for the powder to be entrapped in the void spaces forming the antimicrobial coating.

In another aspect, a method to prepare an antimicrobial coating on a substrate is provided. The method comprises providing a laminate structure having at least an outer layer comprising entangled fibers having void spaces therein, the fibers comprise a thermoplastic polymer having a melting point of less than 120°C. In the next step, sulfonated copolymer in powder form having an average particle size of 10-850 micron is dispersed onto the outer layer and deposited into the void spaces of the outer layer. The sulfonated copolymer is selected from the group of perfluorosulfonic acid polymers such as sulfonated tetrafluoroethylene, polystyrene sulfonates, sulfonated block copolymers, polysulfones such as polyether sulfone, polyketones such as polyether ketone, sulfonated poly(arylene ether), and mixtures thereof. Lastly, an external energy source is applied on the outer layer for the powder to be fusion-bonded into the void spaces, forming the antimicrobial coating layer. Alternatively, the polymer particles can be bonded by any calendaring or powder dot process.

### DESCRIPTION OF THE DRAWINGS

FIG. 1 shows a cross-sectional view of an embodiment of an antimicrobial coating structure with multiple layers, with one outer layer having sulfonated copolymer particles embedded therein.
FIG. 2 shows a cross-sectional view of another embodiment of an antimicrobial structure with both outer surface layers having antimicrobial coating.
FIG. 3 shows a cross-sectional view of yet another embodiment of an antimicrobial structure with both outer surface layers being coated with sulfonated copolymer particles.

### DETAILED DESCRIPTION

The following terms used the specification have the following meanings:

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Molecular weight" or MW refers to the styrene equivalent molecular weight in g/mol, or kg/mol of a polymer block or a block copolymer. MW can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. MW of polymers measured using GPC so calibrated are styrene equivalent molecular weights or apparent molecular weights. MW expressed herein is measured at the peak of the GPC trace and is commonly referred to as styrene equivalent "peak molecular weights," designated as Mp.

"Filter" herein refers to a device for filtering particles, e.g., dust, pollen, pathogens, germs, microbes such as mold, etc., from the air passing through it, with an air permeable filter medium or substrate, for use in applications such as HVAC (heating, ventilating, and air conditioning).

"Effective amount" refers to an amount sufficient to alter, destroy, inactivate, and / or neutralize microbes, e.g., an amount sufficient to sterilize and kill microbes in contact with outer surface of the antimicrobial substrate.

"Ion Exchange Capacity" or IEC refers to the total active sites or functional groups responsible for ion exchange in a polymer. IEC is the inverse of "equivalent weight" or EW, which the weight of the polymer required to provide 1 mole of exchangeable protons. IEC can be measured by NMR, or a conventional acid-base titration method (see International Journal of Hydrogen Energy, Volume 39, Issue 10, March 26, 2014, Pages 5054-5062, "Determination of the ion exchange capacity of anion-selective membrane").

"Microbes" refers to microorganisms including bacteria, archaea, fungi (yeasts and molds), algae, protozoa, and viruses, with microscopic size.

"Susceptible to sulfonation" refers to a polymer, polymer block, compound, monomer, oligomer, etc., being predisposed, or sensitive, or capable of reaction with sulfur containing compound, e.g., SO₃, H₂SO₄, etc., under conditions conventionally employed for sulfonation, wherein sulfonation is very likely to occur to obtain a sulfonated product. In embodiments, a polymer block "susceptible to sulfonation" upon sulfonation, the degree of sulfonation is > 10% or, > 20%, or > 50%, or > 60%, or > 75% of the polymer block, for the block to have > 50 mol%, or > 60 mol%, or > 75 mol% sulfonic acid or sulfonate ester functional groups.

"Resistant to sulfonation" means having little if any sulfonation of the respective block under conditions conventionally employed for sulfonation, with < 10 mol% , or < 5 mol%, or < 2 mol%, or <1 mol% sulfonic acid or sulfonate ester functional groups in the polymer block.

"Surface pH" refers to the pH on the contact surface of substrate (e.g., fabric material), that results from surface bound moieties. The surface pH can be measured with commercial surface pH measuring instruments, e.g., SenTix^{™} Sur-electrode from WTW Scientific-Technical Institute GmbH, Weilheim, Germany.

The disclosure relates to antimicrobial substrates, e.g., a fabric material, whereby a sulfonated copolymer powder is deposited / embedded onto the substrates forming an antimicrobial protective surface layer.

### Antimicrobial Powder

The antimicrobial material is a sulfonated copolymer selected from perfluorosulfonic acid polymers such as sulfonated tetrafluoroethylene, polystyrene sulfonates, sulfonated block copolymers, polysulfones such as polyether sulfone, polyketones such as polyether ketone, sulfonated polyphenylene ethers, and mixtures thereof. Sulfonated copolymer refers to polymers having a sulfonate group, e.g., -SO₃, either in the acid form (-SO₃H, sulfonic acid) or a salt form (-SC₃Na), having antimicrobial properties for killing at least 95% microbes within a pre-defined duration of contact with the sulfonated copolymer embedded in the substrate.

The sulfonated copolymer is characterized as being sufficiently or selectively sulfonated to contain from 10 - 100 mol % sulfonic acid or sulfonate salt functional groups based on the number of monomer units ("degree of sulfonation"), for killing at least 99% of microbes (2 log₁₀ CFU) in < 30 minutes, or < 15 minutes, or < 5 minutes of contact with the coating material. In embodiments, the sulfonated copolymer effectively produces a 1 logic kill efficacy immediately after contact, and at least about a 3 log₁₀ kill efficacy in < 30 minutes, or < 15 minutes, or < 10 minutes, or < 5 minutes. In embodiments, the sulfonated copolymer has a degree of sulfonation of > 10 mol%, or > 25 mol %, or > 50 mol %, or < 95 mol %, or 25-70 mol %.

In embodiments, the sulfonated copolymer is a sulfonated tetrafluoroethylene, having a polytetrafluoroethylene (PTFE) backbone; (2) side chains of vinyl ethers (e.g., - O - CF₂ - CF - O - CF₂ - CF₂-) which terminate in sulfonic acid groups in a cluster region.

In embodiments, the sulfonated copolymer is a polystyrene sulfonate, examples include potassium polystyrene sulfonate, sodium polystyrene sulfonate, a co-polymer of sodium polystyrene sulfonate and potassium polystyrene sulfonate (e.g., a polystyrene sulfonate copolymer), having a molecular weight of > 100,000 g/mol, > 400,000 g/mol, and up to 1,500,000 g/mol. The polystyrene sulfonate polymers can be either crosslinked or uncrosslinked. In embodiments, the polystyrene sulfonate polymers are uncrosslinked and water-soluble.

In embodiments, the sulfonated copolymer is a polysulfone, selected from the group of aromatic polysulfones, polyphenylenesulfones, aromatic polyether sulfones, dichlorodiphenoxy sulfones, sulfonated substituted polysulfone polymers, and mixtures thereof. In embodiments, the sulfonated copolymer is a sulfonated polyethersulfone copolymer, which can be made with sulfonate salts such as hydroquinone 2-potassium sulfonate (HPS) with other monomers, e.g., bisphenol A and 4-fluorophenyl sulfone. The degree of sulfonation in the polymer can be controlled with the amount of HPS unit in the polymer backbone.

In embodiments, the sulfonated copolymer is a polysulfone is a polyether ketone, e.g., a sulfonated polyether ketone (SPEEK), obtained by sulfonating a polyether ketone ketone (PEKK). The polyether ketone ketone is manufactured using diphenyl ether and a benzene dicarbonic acid derivative. The sulfonated PEEK is available as an alcohol and / or water-soluble product.

In embodiments, the sulfonated copolymer is a sulfonated poly(arylene ether) copolymer containing pendant sulfonic acid groups. In embodiments, the sulfonated copolymer is a sulfonated poly(2,6-dimethyl-1,4-phenylene oxide), commonly referred to as sulfonated polyphenylene oxide. In embodiments, the sulfonated copolymer is a sulfonated poly(4-phenoxybenzoyl-1,4-phenylene) (S-PPBP).

In embodiments, the sulfonated copolymer is a sulfonated block copolymer, having a general configuration A-B-A, (A-B)n(A), (A-B-A)n, (A-B-A)ₙX, (A-B)nX, A-D-B, A-B-D, A-D-B-D-A, A-B-D-B-A, (A-D-B)ₙA, (A-B-D)ₙA (A-D-B)ₙX, (A-B-D)ₙX or mixtures thereof; where n is an integer from 0 to 30, or 2 to 20 in embodiments; and X is a coupling agent residue. Each A and D block is a polymer block resistant to sulfonation. Each B block is susceptible to sulfonation. The plurality of A blocks, B blocks, or D blocks are the same or different.

The A blocks are one or more segments selected from polymerized (i) para-substituted styrene monomers, (ii) ethylene, (iii) alpha olefins of 3 to 18 carbon atoms; (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof. If the A segments are polymers of 1,3-cyclodiene or conjugated dienes, the segments will be hydrogenated subsequent to polymerization of the block copolymer and before sulfonation of the block copolymer. The A blocks may also contain up to 15 mol % of the vinyl aromatic monomers such as those present in the B blocks.

In embodiments, the A block is selected from para-substituted styrene monomers selected from para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene and mixtures of the above monomers. Examples of para-substituted styrene monomers include para-t-butylstyrene and para-methylstyrene, with para-t-butylstyrene being most preferred. Monomers may be mixtures of monomers, depending on the source. In embodiments, the overall purity of the para-substituted styrene monomers be at least 90 wt.%, or > 95wt.%, or > 98wt.% of the para-substituted styrene monomer.

The block B comprises segments of one or more polymerized vinyl aromatic monomers selected from unsubstituted styrene monomer, ortho-substituted styrene monomers, meta-substituted styrene monomers, alpha-methylstyrene monomer, 1,1-diphenylethylene monomer, 1,2-diphenylethylene monomer, and mixtures thereof. In addition to the monomers and polymers noted, the B blocks may also comprise a hydrogenated copolymer of such monomer (s) with a conjugated diene selected from 1,3-butadiene, isoprene, and mixtures thereof, having a vinyl content of between 20 and 80 mol percent. These copolymers with hydrogenated dienes may be random copolymers, tapered copolymers, block copolymers or controlled distribution copolymers. The block B is selectively sulfonated, containing from about 10 to about 100 mol % sulfonic acid or sulfonate salt functional groups based on the number of monomer units. In embodiments, the degree of sulfonation in the B block ranges from 10 to 95 mol%, or 15 - 80 mol%, or 20 - 70 mol%, or 25 - 60 mol%, or > 20 mol%, or > 50 mol%.

The D block comprises a hydrogenated polymer or copolymer of a conjugated diene selected from isoprene, 1,3-butadiene, and mixtures thereof. In other examples, the D block is an acrylate or silicone polymer with a number average molecular weight of at least 1000 g/mol. In still another example, the D block is a polymer of isobutylene having a number average molecular weight of at least 1000 g/mol.

The coupling agent X is selected from coupling agents known in the art, including polyalkenyl coupling agents, dihaloalkanes, silicon halides, siloxanes, multifunctional epoxides, silica compounds, esters of monohydric alcohols with carboxylic acids, (e.g., methylbenzoate and dimethyl adipate) and epoxidized oils.

In embodiments, the sulfonated copolymer is neutralized with any of various metal counterions, including alkali, alkaline earth, and transition metals, with at least 10% of the sulfonic acid groups being neutralized. In other embodiments, the sulfonated block copolymer is neutralized with various other organic or inorganic cationic salts, such as those based on ammonium, phosphonium, pyridinium and the like. Salts may be monomeric, oligomeric, or polymeric. In other embodiments, the sulfonated block copolymer is neutralized with various primary, secondary, or tertiary amine-containing molecules, e.g., with the sulfonic acid or sulfonate functional group being modified by reaction with an effective amount of polyoxyalkyleneamine having molecular weights from 140 to 10,000 kg/mol. In embodiments, the sulfonated block copolymer is modified with alternative anionic functionalities, e.g., phosphonic acid or acrylic and alkyl acrylic acids.

In embodiments, the sulfonated copolymer is a cationic polymer, where the B block, rather than being susceptible to sulfonation, is a block that contains, or is susceptible to modification with, quaternary ammonium or quaternary phosphonium structures.

In embodiments, the sulfonated copolymer has a general configuration A-B-(B-A)₁₋₅, wherein each A is a non-elastomeric sulfonated monovinyl arene polymer block and each B is a substantially saturated elastomeric alpha-olefin polymer block.

In embodiments, the sulfonated copolymer is a sulfonated polystyrene-polyisoprene-polystyrene, sulfonated in the center segment. In embodiments, the sulfonated block copolymer is a sulfonated t-butylstyrene / isoprene random copolymer with C==C sites in their backbone. In embodiments, the sulfonated copolymer is a water dispersible B-A-B triblock, with B being a hydrophobic block such as alkyl or sulfonated poly(t-butyl styrene) and A being a hydrophilic block such as sulfonated poly(vinyl toluene).

The antimicrobial and mechanical properties of the sulfonated copolymer can be varied and controlled by varying the amount of sulfonation, the degree of neutralization of the sulfonic acid groups to the sulfonated salts, as well as controlling the location of the sulfonated group(s) in the polymer. In embodiments and depending on the applications, e.g., one with the need for water dispersity / solubility, or at the other spectrum, one with the need for sufficient durability with constant wiping with water based cleaners, the sulfonated block copolymer can be selectively sulfonated for desired water dispersity properties or mechanical properties, e.g., having the sulfonic acid functional groups attached to the inner blocks or middle blocks, or in the outer blocks of a sulfonated block copolymer. If the outer (hard) blocks are sulfonated, upon exposure to water, hydration of the hard domains may result in plasticization of those domains and softening, allowing dispersion or solubility.

In embodiments, the sulfonated copolymer is a water-soluble polymer, e.g., a sulfonated diblock polymer of t-butyl styrene / styrene, or a sulfonated triblock polymer of t-butyl styrene -styrene - t-butyl styrene.

In embodiments, the sulfonated copolymer is a midblock-sulfonated triblock copolymer, or a midblock-sulfonated pentablock copolymer or, e.g., a poly(p-tert-butylstyrene-b-styrenesulfonate -b-p-tert-butylstyrene), or a poly[tert-butylstyrene-b-(ethylene-alt-propylene)-b-(styrenesulfonate)-b-(ethylene-alt-propylene)-b-tert-butylstyrene.

In embodiments, the sulfonated copolymer contains > 15 mol %, or > 25 mol %, or > 30 mol %, or > 40 mol % sulfonic acid or sulfonate salt functional groups based on the number of monomer units in the polymer. In embodiments, the sulfonated copolymer is characterized as being sufficiently sulfonated to have an IEC of > 0.5 meq/g, or 1.5 - 3.5 meq/g, or > 1.25 meq/g, or > 2.2 meq/g, or > 2.5 meq/g, or > 3.5 meq/g, or < 4.0 meq/g.

### Optional Additives for the Sulfonated Copolymer Powder

In embodiments, the sulfonated copolymer further contains or can be complexed with, or otherwise form mixtures, compounds, etc. with, quaternary ammonium and phosphonium containing polymers, chitosan and other naturally occurring antimicrobial polymers, ion-exchange resins, metallic-based micro and nano-structured materials such as silver, copper, zinc and titanium and their oxides, for enhanced antimicrobial effectiveness.

In embodiments, the sulfonated copolymer comprises additives for safety effects, e.g., luminescent additives such as phosphorescent and fluorescence that would help or enable the sulfonated copolymer layer to illuminate, or optical brighteners additives that illuminate under a special UV or black light tracer, allowing for physical inspections to verify that intended surfaces are protected with intended sulfonated copolymer for antimicrobial / self-disinfecting effects.

In embodiments, the polymer comprises a reversible color-changing ink / dye formulation that is sensitive to the concentration and / or presence of the sulfonated copolymer deposited onto the fabric material.

Other additives can be present, such as plasticizers, tackifiers, surfactants, film forming additives, dyes, pigments, cross-linkers, UV stabilizers, UV absorbers, catalysts, highly conjugated particles, sheets, or tubes (e.g., carbon black, graphene, carbon nanotubes), etc., to the extent that they do not reduce the antimicrobial efficacy of the sulfonated copolymer.

Optional additives if present, ranges from 0.1 to 20 wt.%, or 0.5 - 10 wt.%, or 1-7 wt.% of the sulfonated copolymer powder.

### Method for Making Sulfonated Copolymer Powder

After the sulfonation reaction step, which generates a solution of the polymer in a solvent or a blend of solvents, e.g., cyclohexane, heptane, etc., with the polymer concentration in the range of 5-25 wt.%, or 7- 20 wt.%, or 10-15 wt.%, the solvent is removed by methods known in the art, including drying to obtain sulfonated copolymer solids as flakes or ribbons. Depending on the desired particle size, powder is obtained by grinding, e.g., ambient grinding, or preferably, cryogenic grinding (cryogrinding).

The sulfonated copolymer is ground into a powder of a sufficient mean particle size (pre-determined size) corresponding to the voids in the outer layer of the substrate, e.g., with mean particle size being smaller than the average size of the voids in the outer layer of the substrate material. In embodiments, the powder has average particle size of > 5 micron, or 10-850 micron, 50-750 micron, or 75-600 micron, or 100-550 micron, or, 150-500 micron, or 200-450 micron or > 10 micron, or > 50 micron, or > 75 micron, or < 850 micron, or > 200 micron.

Depending on the end-use applications and the substrate material, in embodiments, a sufficient amount of the sulfonated copolymer powder is applied for the powder to be embedded in the interstices such that > 60%, or > 70%, or > 80%, or > 90%, or > 95% of the substrate surface, or portions of the substrate surface, to be contiguously, or non-contiguously covered by the sulfonated copolymer.

### Substrate

In embodiments, the substrate is a fabric material, defined as sheet or web structures, made from separate layers being laminated together, or a single layer comprising a bicomponent fiber based on low melting thermoplastic polymers such as polyethylene, polypropylene and copolymers thereof, having at least an outer layer bonded together by entangling of fibers or filaments, creating pores or void spaces (or interstices) on the surface, for the deposition of the antimicrobial powder. The outer layer comprises a thermoplastic polymer that has a low melting point, e.g., a melting point of less than 120°C, or 45-110°C, or 45-80°C, allowing the sulfonated copolymer powder after deposition being impregnated or embedded thereon. In embodiments, the outer layer comprises a material that can be temporarily shielded or surviving of heat, e.g., polypropylene/rayon nonwovens, polyester nonwoven, etc. The outer layer with the sulfonated copolymer being embedded therein provides the antimicrobial properties, while the inner layer(s) provide(s) other properties, including barrier, softness, stretch, pliability, absorbancy, etc.

The outer layer is typically a flat, porous, sheet-like structure made from separate fibers forming a fabric, or made from molten plastic or plastic film, forming a "web" with voids. The web may be of any variety, including but not limited to, woven, knitted, nonwoven and combinations thereof. The web can be made from processes including but not limited to air laying, wet laid, hydroentangling, spun-bonding, melt-blowing, stable fiber carding and bonding, and solution spinning.

In embodiments, the outer layer of the substrate comprises, consists essentially of, or consists of a low melting point polymer, e.g., a semi-crystalline polyolefin such as polyethylene, polypropylene, blends, and copolymers thereof. Examples include copolymers of ethylene and an α-olefin, such as a C₃-C₂₀ α-olefin or C₃-C₁₂ α-olefin. Suitable α-olefins may be linear or branched (e.g., one or more C₁-C₃ alkyl branches, or an aryl group), including α-olefin co-monomers such as 1-butene, 1-hexene and 1-octene. Examples of polypropylene include polypropylene homopolymers, as well as copolymers or terpolymers of propylene with an α-olefin (e.g., C₃-C₂₀) comonomer, such as ethylene, 1-butene, 2-butene, the various pentene isomers, 1-hexene, 1-octene, 1-nonene, 1-decene, 1-unidecene, 1-dodecene, 4-methyl-1-pentene, 4-methyl-1-hexene, 5-methyl-1-hexene, vinylcyclohexene, styrene, etc.

In embodiments, the polymer is selected from the group consisting of ethylene plastomers, ethylene-vinyl acetate copolymers, ethylene-acrylic acid copolymers or terpolymers and blends thereof.

### Optional Components for the Substrate

In embodiments, the outer layer further comprises components for functions such as absorbency, liquid repellence, resilience, stretch, softness, strength, flame retardancy, washability, cushioning, and filtering. In embodiments, the outer layer includes a slip additive to enhance the softness of the fabric and reduce the coefficient of friction for applications such as gown materials, etc. Other optional additives include one or more pigments, e.g., titanium dioxide, zeolites, kaolin, mica, carbon black, calcium oxide, magnesium oxide, aluminum hydroxide, and combinations thereof.

Depending on the additives and the end-use applications, the amount of optional additive in the outer layer ranges from 0.1 to 10 wt.%, or 0.2 to 7 wt.%, or 0.4 to 4 wt.%.

### Structure of the Substrate

The outer layer with voids (for the impregnation or embedding of the sulfonated copolymer powder) is bonded to at least another layer, which can be constructed with the same material, or with a different material, e.g., a polymer with a higher melting point, or a different polymer with different properties. The various layers can be constructed with different materials (fibers) that extend and shrink at different rates in length when subjected to an external heat source. The fibers when heated, crimp and lock together, having the effect of reducing the spaces and voids between the fibers, thereby prohibiting the sulfonated copolymer particles from exiting, for them to be "embedded" or "impregnated" therein.

In embodiments of the substrate material before calendaring or heating, > 50%, or > 60%, or > 70%, or > 80% of the voids have surface areas sufficiently sized for the impregnation of the powder, e.g., with sizes corresponding to (slightly larger than) the sulfonated copolymer powder particle size, i.e., for > 50%, or > 60%, or > 70%, or > 80% of the powder particles to be positioned in the voids and subsequent embedded in the polymer substrate in a bonding or heating step. The antimicrobial surface coating coverage can be continuous or discontinuous. This means that the sulfonated copolymer powder may not cover 100 % of the substrate area and there may be some voids without sulfonated copolymer powder deposition.

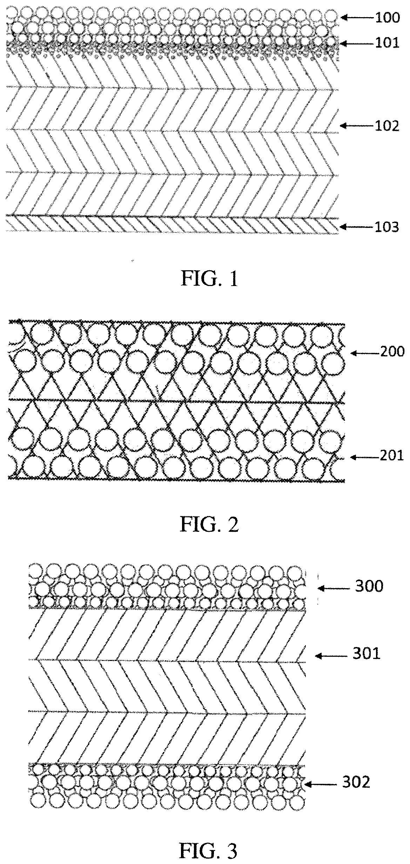

In embodiments, the subsequent layer(s) also have void spaces which can be similar or smaller sized on the surface such that some of the (smaller sized) sulfonated copolymer powder may pass through the spaces or voids of the outermost layer and get embedded into the voids of the subsequent layer(s) 102 as illustrated in FIG. 1. As shown in FIG 1, 100 refers to the outer layer with voids for the impregnation of powder 101 into the voids. The other outer layer 103 is not coated.

In other embodiments, both outer layers are coated as shown in FIG. 2, with both sides 200 and 201 of the substrate being embedded with antimicrobial powder particles. An example is that of a curtain separating hospital beds, or a curtain for medical examining rooms, etc.

In yet other embodiments, the coated outer layer(s) 300 and 302 are further bonded to intermediate layers 301 as shown in FIG. 3 for support, with the layers comprising the same or a different material, which can be woven or non-woven material or fabric.

### Method for Constructing Substrate with Embedded Sulfonated Copolymer

In embodiments, a substrate is provided with various layers being constructed such that at least one outer layer having the fibers (filaments) arranged to define void spaces therebetween of pre-determined size. The outer layer(s) are bonded, manufactured onto, or otherwise joined to other layer(s) in the laminate structure of the substrate. The sulfonated copolymer powder can be incorporated, embedded, or impregnated into the voids or interstices of the substate in various ways to provide an antimicrobial protective surface layer - which can be continuous or discontinuous. Impregnated is used interchangeably with embedded.

In embodiments, the polymer is dispersed /deposited onto the external surface of the outer layer using a controlled dispersion method, with the particles being dispersed in a direction substantially normal to the plane of the outer layer with voids. In embodiments, the dispersion is by any of 1) precision scatter coating, whereby the particles are mechanically distributed onto the surface via a rotary screen; 2) powder spraying, whereby the tiny particles are accelerated though an orifice, usually with the assistance of compressed air, or by vacuum, or ultrasonic; and 3) vibration feeding with either electromagnetic or vibrator motor drives. Using one of aforementioned methods or any other method of controlled dispersion, the sulfonated copolymer particles may be dispersed across the entire surface of the permeable structure (with voids), or only across selected, pre-determined areas of the outer layer structure depending upon the design requirements of the end-use application.

After the dispersion step, the outer surface layer with the powder deposited / embedded therein is subsequently processed by known methods, e.g., heating, calendaring, etc., to entrap the sulfonated powder within the substrate by heat fusion or bonding. In embodiments, the external heat is applied at a temperature lower than the melting point of the polymer of the outer layer. In embodiments, the heat fusion is via an air bonding step, with heated airs flowing substantially the width of the outer layer web to lightly bond the fibers or filaments together, entrapping the powder in the voids.

In embodiments the dispersion step can be combined with the fusion step with a powder dot process. In this process, the substrate is heated by a heated roller while at the same time pressing against an engrave roller containing the sulfonated powder. A doctor blade with a hopper can be used to apply the powder. The printing roll presses the powder onto the substrate producing surface melting entrapping the sulfonated copolymer in the voids of the substrate.

In embodiments for applications requirement antimicrobial protection on both sides of the substrate, after the heat fusion step to impregnate powder into one side of the substrate, the sulfonated copolymer powder is applied onto the other (opposite) substrate size and then followed by another heat fusion step.

In embodiments, after or instead of the heat fusion step, the substrate layers undergo a compaction or calendaring step for the layers to be squeezed together to increase the self-adherence and thereby the integrity of the substrate. In embodiments, the layers are bonded together by ultrasonic bonding or adhesive means.

In embodiments, instead of or in addition to the entrapping of the powder in the voids by thermal bonding, the outer layer of the substrate is first treated (or coated) with an adhesive such as pressure-sensitive adhesive or thermally resistant adhesive before the powder is dispersed onto the substrate surface.

In embodiments, the amount of sulfonated copolymer powder onto the substrate ranges from 0.5 - 500 grams per square meter (loading rate onto substrate surface area), or 1-100 g/m², 1-75 g/m², 5-50 g/m², or > 3 g/m², or > 5 g/m², or > 10 g/m², or > 20 g/m², or < 50 g/m², or < 75 g/m², or < 100 g/m². In embodiments, the substrate to have a surface that is generally coated with the sulfonated copolymer, with the coating to have an average thickness of 0.1 - 100 microns, or < 80 microns, or < 50 microns, or > 50 nm, or 25-600 nm, or 40-400 nm.

### Properties of the Antimicrobial Substrate

The substrate having sulfonated copolymer embedded therein is characterized as being antimicrobial, as a result of the presence of sulfonic acid functional groups encapsulated in the outer layer, for effectively killing microbes that come into contact with the surface. In embodiments, the outer layer with embedded sulfonated copolymer works effectively in destroying / inactivating > 90% (1 log₁₀ CFU or colony forming unit), or > 95%, or 99% (2 log₁₀ CFU), or > 99.5%, or > 99.9% (3 log₁₀ CFU) of microbes in < 30 minutes of exposure, or < 5 minutes of exposure or contact with microbes, including but not limited to MRSA, vancomycin-resistant Enterococcus faecium, X-MulV, PI-3, SARS-CoV-2, carbapenem-resistant Acinetobacter baumannii, and influenza A virus. In embodiments with polymer containing quaternary ammonium group, the material is effective in killing target microbes including Staphylococcus aureus, Escherichia coli, Staphylococcus albus, Escherichia coli, Rhizoctonia solani, and Fusarium oxysporum. The sulfonated copolymer remains effective in killing microbes even > 4 hours, or > 12 hours, or > 24 hours, or > 48 hours.

In embodiments, the outer layer has a surface pH of < 4.0, or < 3.0, due to the presence of the encapsulated sulfonic acid functional groups in the voids. In embodiments with the use of a color indicator or a reversible color-changing in in the sulfonated copolymer powder, or in the polymer constituting the outer layer, a change in the pH can be used to evaluate the antimicrobial effectiveness of the substrate.

### Applications

The substrate with the sulfonated copolymer embedded therein can be used in the form of elastic or non-elastic films, films, or sheets, having one side or both sides with antimicrobial effects. The applications can be medical or non-medical, e.g., protective garment, gowns or aprons, beddings, covers, coveralls, wraps, pads, curtains, personal care products, face masks, gloves, foot covers, diapers, absorbent articles, wipes, and adult incontinence articles. In medical or personal care applications, the outer layer with antimicrobial properties can be placed on either an outer or inner layer away from skin-contacting surface, such as either a lining or a matrix for another substrate. The substrates with the embedded sulfonated copolymer can also be used as air filters such as HVAC (heating, ventilating, and air conditioning).

### Examples

The examples are provided to further illustrate the disclosure.

### Example 1 - Preparation of sulfonated copolymer film

Film samples of sulfonated penta block copolymer (SPBC) of the structure poly[tert-butylstyrene-b-(ethylene-alt-propylene)-b-(styrene-co-styrene¬sulfonate)-b-(ethylene-alt-propylene)-tert-butylstyrene] with 52% sulfonation were cast out of 1:1 mixture of toluene and 1-propanol. The sulfonated copolymer film samples were subjected to abrasion testing of 2200 cycles in the presence of 3 common disinfectants: 1) 70% ethanol, benzalkonium chloride, and quaternary ammonia.

After abrasion testing, the film was cut into strips of "2" by 4" each. Tests were conducted to evaluate antimicrobial efficacy and the long-lasting antiviral properties of sulfonated copolymer film samples with exposure to SARS-CoV-2 virus. In the test, a SARS-CoV-2 vial (1.3×10⁷pfu/ml) diluted to 1×10⁷pfu/ml in DMEM (Dulbecco's Modified Eagle Medium) with 10% FBS (Fetal Bovine Serum) and mixed by pipetting. 5µl was applied to each film sample by pipette, and spread to ensure maximum contact, using a 10% organic soil load. After 2 hours contact time, virus was recovered by washing with DMEM containing 10% serum. Resulting dilutions were used to infect 5×10⁵ VeroE6 cells, in triplicate. Wells were covered with Noble agar. Plates were incubated for three days at 37°C and 5% CO₂. Agar was removed and cells were stained with Crystal Violet. Plaques were counted in wells containing the lowest countable dilution and recovered virus concentrations were calculated. Results show a > 99.999% reduction in virus concentration (> 5 logic CFU reduction).

### Example 2 - Preparation of sulfonated copolymer powder

Sulfonated penta block copolymer (SPBC) of the structure poly[tert-butylstyrene-b-(ethylene-alt-propylene)-b-(styrene-co-styrene¬sulfonate)-b-(ethylene-alt-propylene)-tert-butylstyrene] with 26% (IEC of 1.0) and 52% (IEC 2.0) sulfonation in solution of cyclohexane / heptane (without antioxidant) is dried then shredded, forming flakes or ribbons. The ribbons having an average size of ~ 0.4 inches is cryoground in a grinder having a 20-mesh screen. The resultant free flowing finely divided powder do not block or agglomerate, when packaged and contained under load. The powder has an average diameter of 50-120 microns.

### Example 3 - Preparation of an Antimicrobial Substrate

The substrate with multiple layers of the semicrystalline polyolefin material is constructed from the polyethylene / polypropylene (PE/PP) bi-component fiber/film. The bicomponent fiber/film with a thickness of 100 µm each laminated together to form a substrate having multiple layers. The sulfonated copolymer powder is then dispersed on the external surface of the outer layer. Vacuum is applied to sink the powder into the voids, and the substrate is heated to a temperature of < 100°C. As the substrate with the PE and PP having different melting points, the fiber crimps upon heating, trapping the powder in the void spaces. The substrate is then subjected to calendaring for the layers to be squeezed together.

### Example 4 - Antimicrobial Testing

The nonwoven samples of Example 3 are cut into 1" × 1" squares for testing per US Environmental Protect Agency Office of Pesticide Programs protocol, *"Interim Method for Evaluating the Efficacy of Antimicrobial Surface Coatings."* A 20 µL mixture of stock cultures from lyophilized cultures of *Pseudomonas aeruginosa* and *Staphylococcus aureus* are placed directly on the squares. Following 1-2 hour contact time in a biosafety cabinet (no humidity control) at ambient temperature, e.g., 15° to 25°C, the squares are placed in 5 mL of PBS (Phosphate Buffer Saline) and vortexed to aid removal of bacteria from the squares into the solution. Serial dilutions prepared from the bacterial recovery solution are plated onto agar plates to determine the efficacy, showing > 99% of the virus within 120 minutes, 60 minutes, 30 minutes, or within 5 minutes of exposure are killed/inactivated. Qualitatively, to verify effective bacterial recovery, the samples are also placed into 5mL PBS and incubated overnight and checked at regular intervals (30 min, 1 hr, 2hrs, 4 hrs, 8 hrs, 16 hrs, and 24 hrs) to observe turbidity in case of partial bacterial recovery. No turbidity was observed.

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. An antimicrobial substrate having a coating on at least a portion of an outer layer of a substrate, wherein:
the coating comprises sulfonated copolymer in powder form having an average particle size of 10-850 micron, the sulfonated copolymer having an Ion Exchange Capacity of at least 1.0 meq /g to reduce a microbe concentration by at least 1 log₁₀ CFU within 120 minutes contact with the sulfonated copolymer;
the outer layer comprises entangled fibers having void spaces with surface area sufficiently sized for deposition of the powder therein, the fibers comprising a thermoplastic polymer having a melting point of less than 120°C; and
after deposition of the powder into the void spaces, the coating is heated to a temperature of less than 120°C for the powder to be entrapped in the void spaces forming the antimicrobial coating.

2. The antimicrobial substrate of claim 1, wherein the sulfonated copolymer is selectively sulfonated to contain from 10 - 100 mol % sulfonic acid or sulfonate salt functional groups based on the number of monomer units or blocks in the sulfonated copolymer susceptible to sulfonation, for the coating material to kill at least 95% of microbes within 30 minutes of contact.

3. The antimicrobial substrate of any of claims 1 - 2, wherein the sulfonated copolymer has an ion exchange capacity (IEC) of > 1.25 meq /g.

4. The antimicrobial substrate of any of claims 1 - 2, wherein the sulfonated copolymer has a general configuration of A-B-A, (A-B)n(A), (A-B-A)n, (A-B-A)ₙX, (A-B)nX, A-D-B, A-B-D, A-D-B-D-A, A-B-D-B-A, (A-D-B)ₙA, (A-B-D)ₙA (A-D-B)ₙX, (A-B-D)ₙX or mixtures thereof, wherein
n is an integer from 0 to 30,
X is a coupling agent residue,
each A and D block is a polymer block resistant to sulfonation,
each B block is susceptible to sulfonation,
the A block is selected from polymerized (i) para-substituted styrene monomers, (ii) ethylene, (iii) alpha olefins of 3 to 18 carbon atoms; (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof;
the B block is a vinyl aromatic monomer, and
the D block is a hydrogenated polymer or copolymer of a conjugated diene selected from isoprene, 1,3-butadiene and mixtures thereof; and
wherein the block B is selectively sulfonated to contain from 10 - 100 mol % sulfonic acid or sulfonate salt functional groups based on the number of monomer units, for the coating material to kill at least 99% of microbes within 30 minutes of contact.

5. The antimicrobial substrate of any of claims 1 - 2, wherein the powder has an average particle size of 200-450 micron.

6. The antimicrobial substrate of any of claims 1-2, wherein the powder is deposited into the void spaces in the entangled fibers of the outer layer at a rate from 1 - 100 grams per square meter (GSM), based on the area of the entangled fibers.

7. The antimicrobial substrate of any of claims 1-2, wherein the powder is deposited into the void spaces at a rate of > 10 grams per square meter (GSM).

8. The antimicrobial substrate of claim 7, wherein the powder is deposited at a rate > 75 grams per square meter (GSM).

9. The antimicrobial substrate of any of claims 1-2, wherein the powder is deposited into the void spaces by any of precision scatter coating, powder spraying, vacuum, electrostatic charge, ultrasonic, vibration feeding, and combinations thereof.

10. The antimicrobial substrate of claim 9, wherein the powder after being deposited into the void spaces, is embedded into the void spaces by any of thermal bonding, calendering, hot air, ultrasonic bonding, and combinations thereof.

11. The antimicrobial substrate of any of claims 1-2, wherein the antimicrobial substrate is used in a protective garment, gowns, aprons, beddings, covers, coveralls, wraps, pads, curtains, personal care products, gloves, foot covers, diapers, absorbent articles, wipes, and adult incontinence articles.

12. The antimicrobial substrate of any of claims 1-2, wherein the antimicrobial substrate comprises multiple layers, and wherein at least one of the layers comprises a semicrystalline polyolefin material selected from the group consisting of polyethylene, polypropylene, ethylene,C₃-C₂₀ α-olefin, C₃-C₁₂ α-olefin, copolymers, and mixtures thereof.

13. The antimicrobial substrate of claim 12, wherein the semicrystalline polyolefin layer further comprises at least an additive, selected from the group consisting of titanium dioxide, zeolites, kaolin, mica, carbon black, calcium oxide, magnesium oxide, aluminum hydroxide, and combinations thereof.

14. The antimicrobial substrate of claim 13, wherein the additive is present in an amount of 0.1-10 wt. %.

15. A method for forming an antimicrobial coating on a substrate, the method comprising:
providing a laminate structure having at least two layers, with at least one outer layer comprises entangling fibers having void spaces therein, the fibers comprising a thermoplastic polymer having a melting point of less than 120°C;
providing sulfonated copolymer in powder form having an average particle size of 10-850 micron for forming the antimicrobial coating, the sulfonated copolymer selected from the group of perfluorosulfonic acid polymers, polystyrene sulfonates, sulfonated block copolymers, polysulfones, polyketones, sulfonated poly(arylene ether), and mixtures thereof,
the sulfonated copolymer has an Ion Exchange Capacity of at least 1.0 meq /g to reduce a microbe concentration by at least 1 log₁₀ CFU within about 120 minutes contact with the coating comprising the sulfonated copolymer, dispersing the sulfonated copolymer powder into the void spaces of the outer layer; and
applying an external energy source on the outer layer for the sulfonated copolymer powder to be fusion bonded into void spaces, forming the antimicrobial coating layer on the substrate.
